# EUROPEAN PATENT APPLICATION

(11) **EP 2 022 687 A1**
(43) Date of publication of application: **11.02.2009**
(21) Application number: 07014933.1
(22) Date of filing: 30.07.2007
(51) Int. Cl.: B60S 1/48, F24H 1/12

(54) **Vehicular fluid heater**

(71) Applicant: Wu, Chia-Hsiung, Taipei Taiwan (CN)
(72) Inventor: Wu, Chia-Hsiung, Taipei Taiwan (CN)
(74) Representative: Becker Kurig Straus

(57) **Abstract**

A vehicular fluid heater is used to heat fluid for defrosting or cleaning a windshield, a head lamp, etc., and viscous fluid such as hydraulic oil, lubrication oil, etc. to reduce viscosity and improve performance, particularly during a cold condition. The heater is constructed by a plurality of laminated heating composites joined to heat conduction surfaces of a heat exchange vessel, which facilitates ease of production, maintenance, and heating power selection. A fluid field is defined by fluid pathways formed by a structural design that assembles the heat exchange vessel, and a front and a back seal panels disposed on the heat exchanger.

## Description

### BACKGROUND OF THE INVENTION

### a) Field of the Invention

The present invention relates to a vehicular fluid heater 10, and more particularly a vehicular fluid heater 10 used to heat such as wash fluid for defrosting or cleaning a windshield, a head lamp, or a visual port, or in heat dissolution function of viscous fluid such as diesel fuel, hydraulic oil, lubrication oil, etc. to reduce viscosity or preheat oil molecules for activation, thereby improving performance of an engine, particularly during a cold condition.

### b) Description of the Prior Art

In a geographical zone with low or subfreezing temperature during a winter season, viscosity of fluid in a vehicle can decrease its primary functions, whether the fluid is burning fuel, lubrication oil for lubricating parts, or wash fluid for cleaning a windshield. Generally, a fluid heating system will be installed in line with a fluid reservoir to improve the fluid characteristics in a cold weather, such as that an engine can start more quickly, a shorter warm-up time for a car can be shortened, and even that deep frosts can be cleared almost instantly after being formed on a windshield or a head lamp.

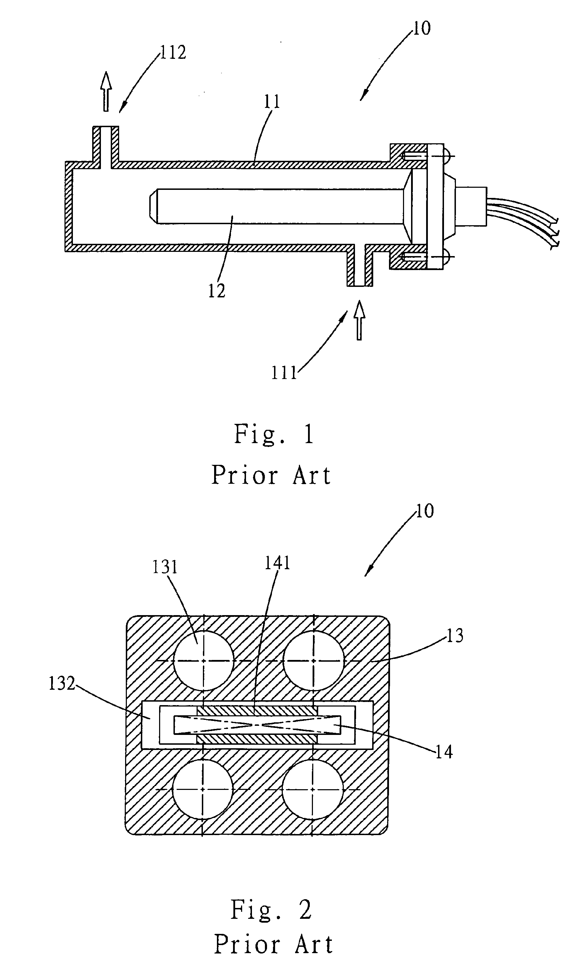

There are several types of fluid heating systems available as prior arts. FIG 1 shows an affinity type heating system structured with a fluid vessel 11, front and rear ends of which are fitted with an inlet 111 and an outlet 112, respectively. An affinity type heating element 12 is axially installed inside the fluid vessel 11, where heat can be exchanged between the fluid entering from the inlet 111 and the heating element 12, and the heated fluid will flow out of the outlet 112. Technological challenges for this type of heater include that an electrical connection device of the affinity type heating element 12 must be sealed from contacting with the fluid, materials of elements must be able to resist various types of corrosion, and a sophisticated array of sensors are required to control a heating time to ensure safe application.

In addition to the aforementioned method, there exists magnesium oxide which is used as a packaging material to seal a conventional heating wire, to serve as a heating element. The heating element is formed as a plate and is affixed at a side of a heating vessel, allowing heat to be indirectly transmitted to fluid carried by the heating vessel. However, the heating wire will be fractured along with the packaging material due to external force. As shown in the US Patent No. 6093909 filed by the German DBK Company, a plurality of radiators are joined face to face, to interpose PTC (Positive Temperature Coefficient)-heating elements for accomplishing the heating element, which is a very advanced design. However, as channels are connected serially or parallel, it is more difficult to implement a leak-proof function. As its structure is formed by abutting and joining a plurality of radiators, gaps will be formed at interfaces, and as paths of thermal compensation between the radiators are cut off, it is not easy to compensate the heat between the radiators.

FIG 2 shows another heating system in the prior arts. In this design, a built-in heating element 14 is positioned inside a cavity 132 of a heat exchange vessel 13. Fluid pathways 131 are formed as a part of the heat exchange vessel 13 at relative locations outside of the cavity 132 to provide for streaming of the heated fluid and to exchange heat between the fluid and the built-in heating element 14. The built-in heating element 14 is insulated peripherally by plate electrodes 141, and is then emplaced into the cavity 132. The heating element 14 is fixed inside the cavity 132 by sustained clamping force formed after controlled mechanical deformation of the cavity 132. Disadvantages of this type of heating system include high susceptibility to damages due to thermal stress and no means for repairing the damaged heating element 14. If the heating element 14 fails to function, the entire heating system must be replaced, thereby resulting in excessive waste and adding a burden to ecology.

The aforementioned heating systems of the prior arts are unable to provide different power ratings flexibly, forcing manufacturers to stock heating systems with different power specifications in order to provide rapid responses to customer needs. This will increase inventory cost of the manufacturer. Furthermore, these heating system designs of the prior arts prevent standardization for mass production and therefore can increase production cost.

### SUMMARY OF THE INVENTION

The present invention is to provide a vehicular fluid heater to improve effectiveness and benefits of a vehicular fluid heating system.

The primary objective of the present invention is to use a laminated heating composite flatly joined to a heat conduction surface of a heat exchange vessel, and to utilize electrical and thermal functions of the aforementioned fluid heating system to effectively and efficiently transfer heat generated by the heating composite to the fluid via material surfaces of the heat exchange vessel, and to enable easy replacement of parts or repairing of the laminated heating composite, and allow assembling one or a plurality of laminated heating composites onto the heat exchange vessel, thereby facilitating a selection of the required power or producing the heating systems.

A second objective of the present invention is to enclose sealing panels with a flow diversion function at a front and a rear end of the heat exchange vessel.

A third objective of the present invention is to press on an outer surface of the laminated heating composite with a sealing back plate, and to install a buffer device between the laminated heating composite and the sealing back plate.

A fourth objective of the present invention is to electrically connect a negative plate electrode of the laminated heating composite to the heat exchange vessel directly, with the heat exchange vessel conducting electrically to a negative electrode of a car body, to avoid an electric arc caused by a surge charge originating from a positive plate electrode.

A fifth objective of the present invention is to assemble the laminated heating composite and the heat exchange vessel, by gluing between them to stop leakage.

A sixth objective of the present invention is to use a ceramic or polymer resistance heating strip with a positive temperature coefficient (PTC) as a heat source to provide a self-regulated heating characteristic. The use of ceramic material can facilitate reinforcing mechanical strength of the heater system assembly.

A seventh objective of the present invention is to utilize the heat exchange vessel for heating the wash fluid.

An eighth objective of the present invention is to utilize the heat exchange vessel for heating the burning fuel or the lubrication oil.

A ninth objective of the present invention is to clad insulation rubber on an outer surface of the plate electrode of the laminated heating composite, to achieve a moisture-proof or anti-oxidation function.

To enable a further understanding of said objectives and technological methods of the invention herein, a brief description of the drawings is provided below followed by detailed descriptions of the preferred embodiments.

### BRIEF DESCRIPTION OF THE DRAWINGS

FIG. 1 shows a cross sectional view of an affinity type heater of prior art.
FIG. 2 shows a cross sectional view of a built-in heater of prior art.
FIG. 3 shows an exploded view depicting a method of assembling components according to the present invention.
FIG. 4 shows a schematic view depicting a method of positioning a plurality of sets of laminated heating composites on a heat exchange vessel, according to the present invention.
FIG. 5 shows a perspective view of a completed assembly of FIG. 3.
FIG. 6 shows a schematic view of a component assembling sequence according to the present invention.
FIG. 7 shows a schematic view depicting an alternative component assembling sequence according to the present invention.
FIG. 8 shows a schematic view implementing a heating strip according to the present invention.
FIG. 9 shows a schematic view of an embodiment of the present invention.
FIG. 10 shows a schematic view depicting that terminals of an electrode plate are positioned at a sealing plate of the present invention.

### DETAILED DESCRIPTION OF THE PREFERRED EMBODIMENTS

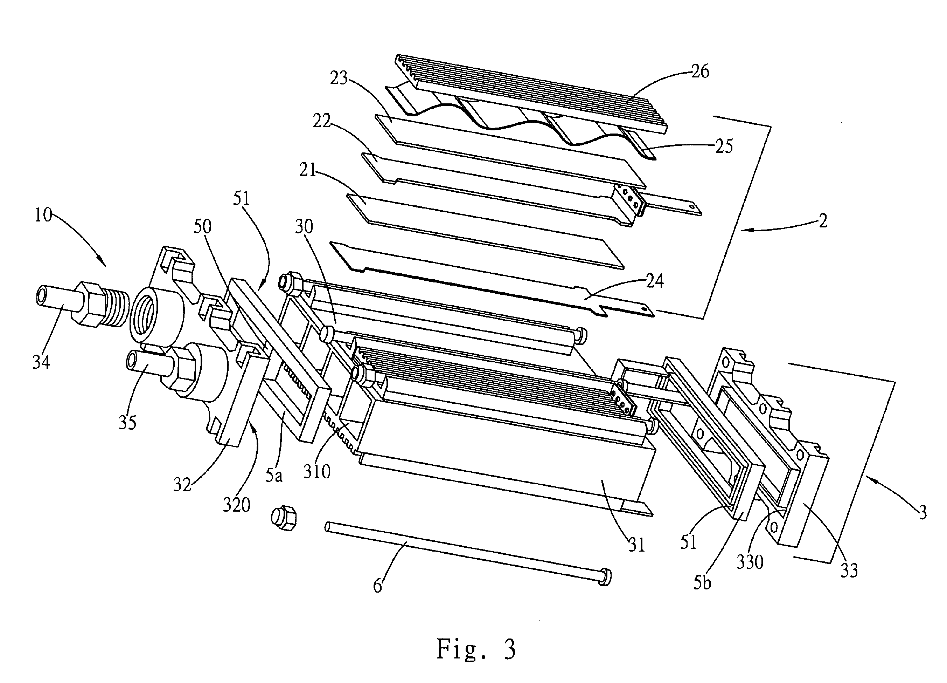

FIG 3 shows a schematic view of a heating system 10 which is a heat exchanger 3 comprising a laminated heating composite 2 flatly jointed to a heat exchange vessel 31 of the heat exchanger 3. The laminated heating composite 2 conducts electricity to a heating strip 21 using plate electrodes 22 and 24. An external power switching mechanism can be utilized to control a power-on period for the heater strip 21. As the power switching mechanism is an ordinary manual or automatic switch, it will not be described further.

An insulation plate 23 with either a good or poor thermal conductivity, depending on specific applications, is used to provide electrical insulation for the laminated heating composite 2. The insulation plate 23 is positioned at an exterior side of the plate electrode 22 and an interior side of a sealing back plate 26.

The heating strip 21 can be fabricated from any single plate unit of electro-thermal materials such as an electric heating wire or a composite PTC heating strip based on ceramic or polymer. Using a self-regulated heating function of the PTC heating strip, a heater assembly of the present invention provides another unparalleled control to the application. By using electrical thermal properties of the PTC heating strip, the present invention is able to detect temperature and current fluctuations for indicating a working condition, so as to institute controls for achieving an optimal performance and safety for the heating system. Furthermore, using the rigid PTC material can enhance mechanical strength of the present invention. In addition, using a mineral material for the PTC heating strip enables a precise assembly between the elements, due to a lower thermal expansion rate of the mineral material.

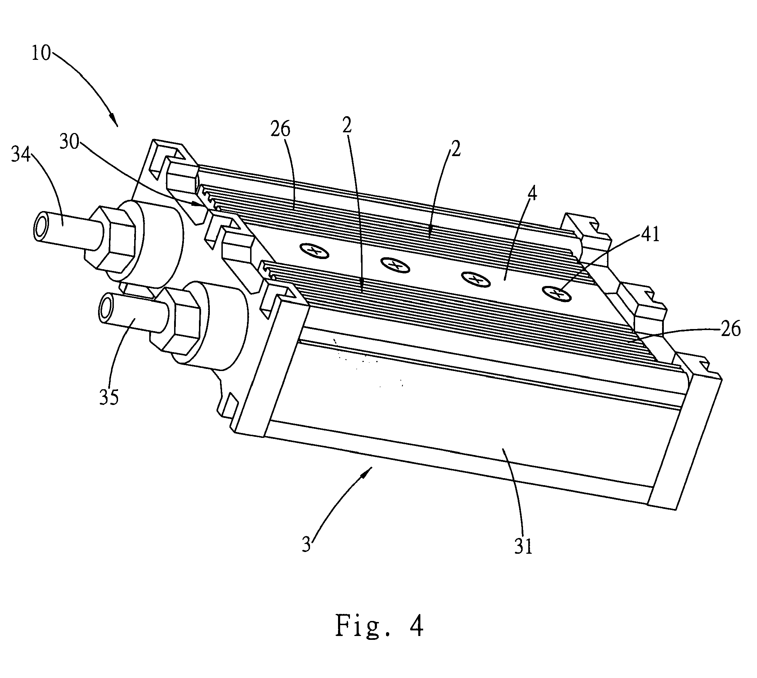

The laminated heating composite 2 is affixed to a heat conduction surface 30 of the heat exchange vessel 31 of the heat exchanger 3 (as shown in FIG. 4), and the heat conduction surface 30 of the exchange vessel 31 is configured to provide a plurality of adjacent and opposite heat conduction areas for attaching a plurality of laminated heating composites 2. The number of heat conduction surfaces 30 configured on the heat exchange vessel 31 depends on requirements for specific heating power of applications and performances of the heating power. Therefore, different number of laminated heating composites 2 can be assembled onto the heat exchange vessel 31 according to customer requirements without redesigning the entire heat exchanger 3 for each power rating requirement. This method also presents a means for higher productivity in manufacturing the heat exchanger 3.

Referring to FIG 3, by gluing, the plate electrode 24 leads the laminated heating composite 2 to be positioned on the heat conduction surface 30, for transmitting heat to the heat exchange vessel 31. The plate electrode 24 is designed to serve both as an electrical contact and a buffer to stress. The function of electric contact can conduct the plate electrode 24 to a negative electrode, and then negative electricity can conduct from the body of heat exchanger 3 to a negative electrode of a car body which is provided with a larger capacitance to avoid possible creepage or blackout. These two functions are accomplished on a surface of the plate electrode 24 that the electrical contact on the surface can be enhanced by gluing, and a buffer to various mechanical and thermal stresses between the laminated heating composite 2 and the heat exchange vessel 31 can be provided. The two aforementioned functions can be determined by physical properties of the material of the plate electrode 24, or other thin layer with heat transmission capability (such as a glue layer) or any polymer medium with a specific shape can be used to form a buffering, heat transmission, electric conduction, or even insulation function, as long as that it can prevent a physical reaction, such as thermal deformation, and can possibly provide a moisture-proof or anti-oxidation function.

A plastic-elastic buffer device 25 possessing spring properties in a form of a spring strip or a polymer based silicon or other rubber material is positioned between the laminated heating composite 2 and the sealing back plate 26. The buffer device 25 functions to compensate heat deformation and relieve the associated mechanical and thermal stresses that may be formed on the heating strip 21. In addition, the sealing back plate 26 is used to transfer pressure during assembling the laminated heating composite 2 for joining all parts to the heat exchange vessel 31.

Fluid pathways 310 are formed within the heat exchange vessel 31. A front seal panel 32 and a rear seal panel 33 can be made of a plastic or metallic material, are uniquely designed with spaces for fluid flow, define the aforementioned fluid field, and are provided with positioning holes to position power terminals. Fluid connectors 34, 35 are molded together with the front seal panel 32 as one entity. Using a plastic material with a low thermal conductivity allows more direct use of the heat generated by the heating strips 21 to heat the fluid without having heat loss, thereby increasing a heating rate of the system. In addition, the plastic seal panels can serve as an insulation platform to segregate terminal connections of the plate electrodes to ensure electrical insulation, thereby preventing short circuit. Sequential first-in-first-out fluid flow paths are formed upon assembling the front seal panel 32 and the rear seal panel 33 to the heat exchange vessel 31. On the other hand, in applications where plastic materials are not suitable, metallic materials can be used to fabricate the seal panels, whereas the fluid connectors can be made independently and fitted with the metallic panels for connecting to fluid hoses.

The seal panels are made of a metallic material, and at locations corresponding to through-holes transfixed by the electrode terminals, there are positioning holes used for positioning and as insulation.

The joining of the front seal panel 32 and back seal panel 33 to the heat exchange vessel 31 is accomplished with an appropriate seal or any pressing method or glue as an interfacial sealing material between the aforementioned components. After a ribbed structure of the heat exchange vessel 31 is pressed mechanically, it is locked into rubber seals 5a & 5b that are specifically designed, and then locked into seal trenches 320, 330 of the seal panels, such that the seal panels 32, 33 can be tightly joined to corresponding end surfaces of the heat exchange vessel 31.

Opposite assembly force between the front and rear seal panels 32, 33 can be achieved by pulling of screws 6. As the seals 5a, 5b are a kind of heat-proof or insulated elastic material, such as a rubber, the bodies are provided with plastic deformation force, and their cross sections are provided with grooves 51 corresponding to end surface structures of the heat exchange vessel 31, they can be sheathed at the end surfaces of the heat exchange vessel 31 (and according to direction requirement of the flow pathway 310, a division part 50 is installed at the front seal 5a, allowing the fluid pathway 310 to enter, circulate, or reeve around the fluid field). The end surfaces of the heat exchange vessel 31 can be latched into the seal trenches 320, 330, to form a three-plane contact. Therefore, when the seal panels 32, 33 are glued ordinarily, a leakage-proof problem for each component from a different swelling rate can be overcome by elastic strain of the sealing material. If the front and rear seal panels 32, 33 are subjected to external force, such as the indexed pulling force of the screws, opposite clamping pressure will be formed, in association with an indirect rigid function of the heat exchange vessel 31, to press the seals 5a, 5b to deform. By a counter-reaction to the deformation of the seals 5a, 5b, tensile stress will be formed on a contact surface of each component, to fill possible residual gaps, thereby achieving an effective sealing.

In actual applications, fluid flows from a supply hose through one of the fluid connectors 34, 35 and into the flow pathways 310 of the heat exchange vessel 31. Once inside the heat exchange vessel 31, the heat generated by the laminated heating composite 2 is transferred to the fluid via the ribbed material of the heat exchange vessel 31. The heat exchange can take place when the fluid is flowing continuously or is idle intermittently, to allow the fluid to reach the desired temperature.

After carrying out the proper heat exchanging reaction, the heated fluid is forced out of the heat exchange vessel 31 through a connector designated as the "output" to achieve the objectives of aforementioned heating applications and output the heated fluid for defrosting or cleaning a windshield, a head lamp, a visual port, or for reducing viscosity of viscous fluids such as diesel fuel, hydraulic oil, lubrication oil, etc, or for forming a preheat effect to burning fuel such as diesel fuel, to more activate oil molecules for fast explosion or nearly burning completely, thereby improving a performance of an engine, a lubrication system, and cooling oil.

Referring back to FIG 3, the plate electrode 24 joins together with the heat exchange vessel 31 and acts as a negative electrode for the heating strip 21. Electricity flows from the positive plate electrode 22, through the heating strip 21, to the negative plate electrode 24, and further enters into a grounded circuit of a vehicle wiring system. Since most metal framed vehicle bodies are used as the grounded circuits, connecting the heat exchange vessel 31 to the vehicular grounded circuit via the plate electrode 24 will simplify the wiring and improve vehicle safety, by providing electric charge which is accumulated in the circuit or excessive electric charge when there is a power surge.

The insulation plate 23 is any plate material with high dielectric value, making it ideal for electrical insulation. The plate material can be a heat conductive aluminum oxide (Al₂O₃) plate, mineral ceramic material, thermally insulative plastic material, or any material with thermal conductivity within the three.

At least two methods can be used to realize the joining of the laminated heating composite 2 to the heat conduction surface 30 of the heat exchange vessel 31. The first method uses an adhesive applied on all bonding surfaces followed by curing to tightly join together the related components. The electrical contact and mechanical assembly of the system are maintained by using a mechanical press to maintain compression while the adhesive is being cured.

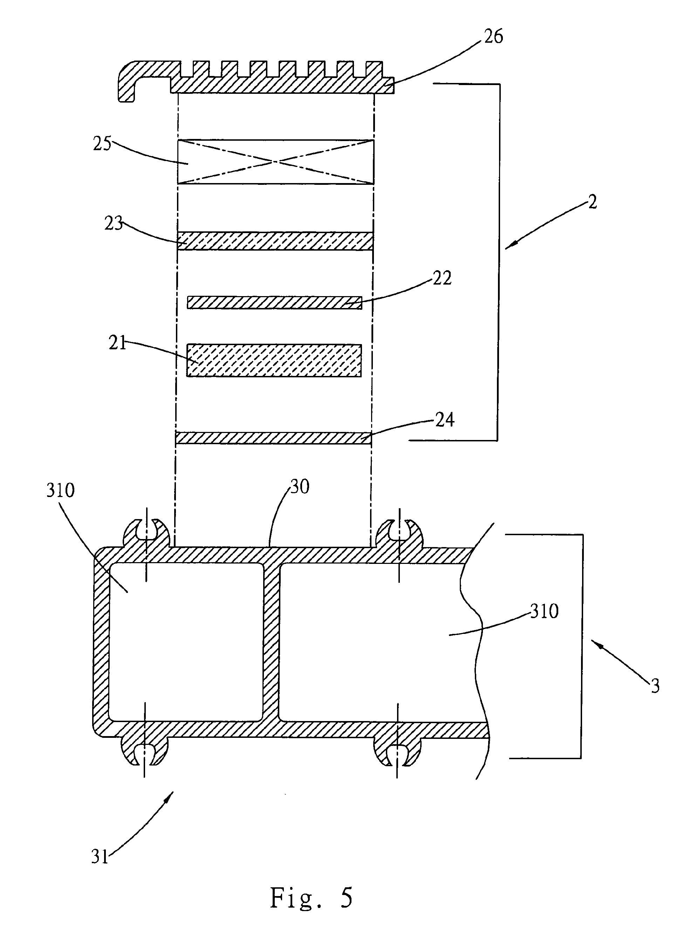

Referring to FIG 4 and FIG. 5, the second method uses a compression plate 4 and fixing screws 41 to form a compression joint on the sealing back plate 26. The sealing back plate 26 then transfers the compression force to the remaining components to firmly join the laminated heating composite 2 to the heat exchange vessel 31. This method enables easy access for repairing the laminated heating composite 2 by simply loosening the screws and removing the compression plate 4.

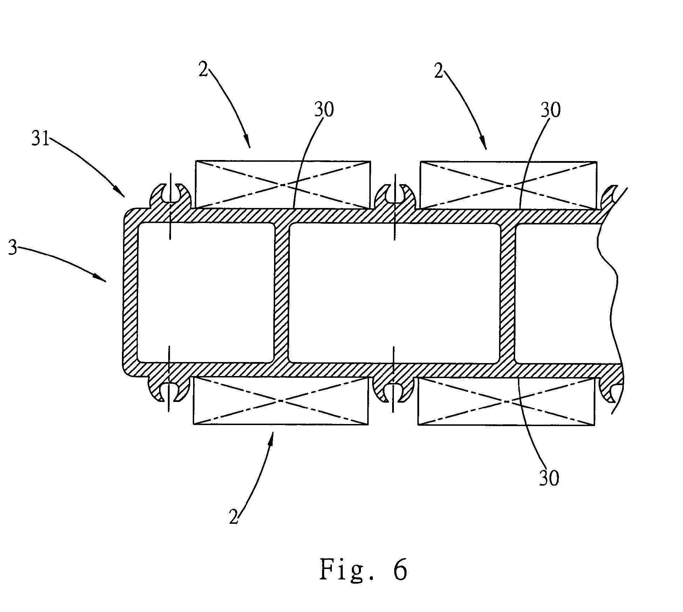

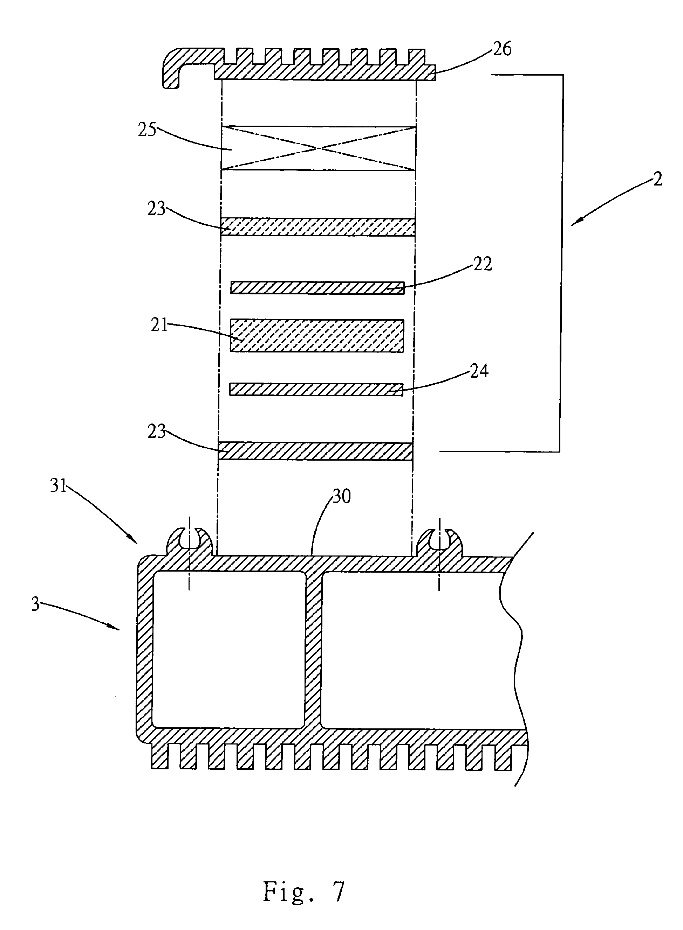

As previously described, a plurality of the laminated heating composites 2 can be selectively installed on the surfaces of the heat exchanger 3, as shown in FIG 6; whereas, FIG 7 shows an alternative sequence for constructing the heat exchanger 3 wherein the heat exchange vessel 31 is not electrically connected to the plate electrode 24. Instead, an extra insulation plate 23 is emplaced between the plate electrode 24 and the heat exchange vessel 31 to provide a wiring system independent of other vehicular power systems. The heat generated by the laminated heating composite 2 is now transferred to the fluid via the extra insulation plate 23. This type of electrical wiring method is essential for applications in vehicles that carry highly flammable liquids and gases and in vehicles with a large amount of plastic paneling. As this alternative construction provides a more reliable and safer system, and the insulation plate 23 leads the laminated heating composite 2 to be joined with the heat exchange vessel 31, its assembly method can similarly use any mechanical force for clamping and assembling, or use other gluing methods for assembling. In addition, considering a problem of thermal swelling and cold shrinking between each element, a heat conductive buffer layer can be implemented between the laminated heating composite 2 and the heat conduction surface 30, such as a rubber interface or other elastic element.

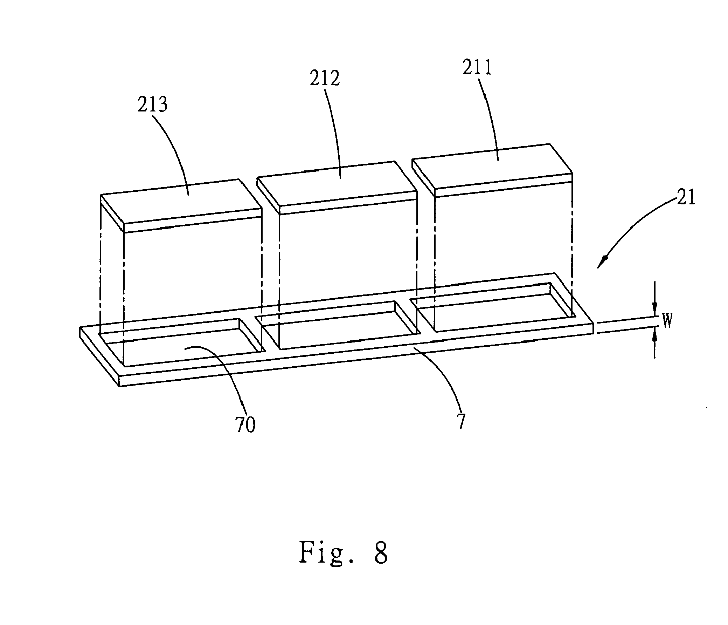

Alternatively, as shown in FIG. 8, a position plate made of an insulating material such as ceramic or plastic can be used to electrically isolate the electricity. This assembly method can further enhance the fluid heat-up rate by reducing a number of thermal barriers from the heat exchanging structure to the fluid.

The heating strip 21 can be constituted by a plurality of PTC heating plates 211, 212, 213. The method for constituting the strip uses a positioning plate 7 which is provided with holding spaces 70 to secure the PTC heating units, and to form the long-strip heating strip 21 in an array. By this securing arrangement, the heating strip 21 can be specifically formed, and peripheries can be insulated. In addition, by a separation of a width W at the peripheries of the positioning plate 7, creepage or blackout distance between the neighboring plate electrodes 22, 24 (not shown in the drawing), under an unstable current condition, can be increased.

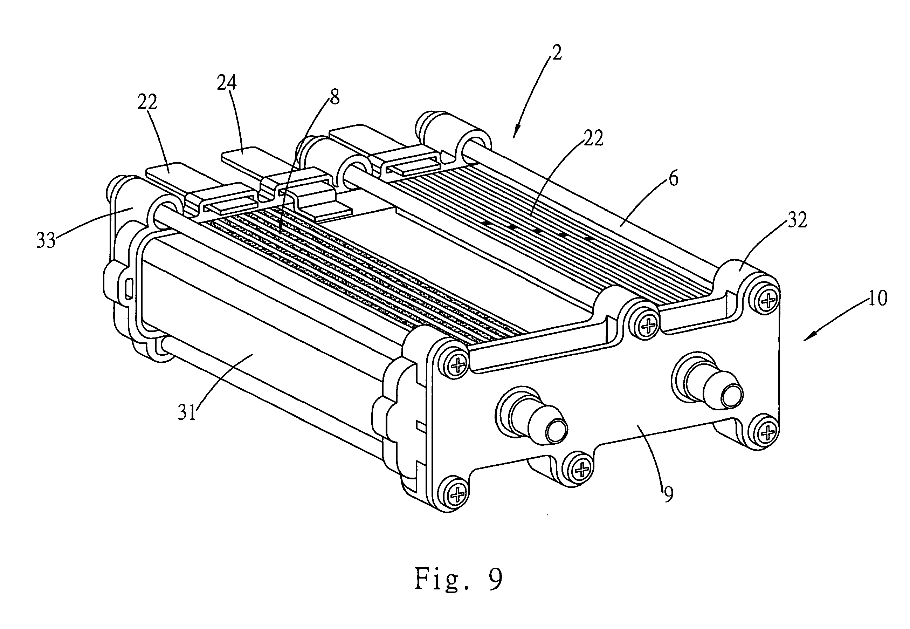

Referring to FIG. 9, the laminated heating composite 2 is assembled with the heat exchanger 31 by gluing, is provided with the positive and negative plate electrodes 22, 24, and is assembled with the heat exchange vessel 31 by any method, wherein the negative plate electrode 24 is directly conducted to a grounding of the heat exchange vessel 31, and as the exchange vessel 31 is made of a metallic material for conducting electricity, the negative electrode is then conducted to a grounding of a car body. Therefore, if there is a current surge for the positive electricity, then it can be held by the grounding of the car body, thereby avoiding blackout sparks.

As an outer surface of the positive plate electrode 22 of the laminated heating composite 2 is exposed, its upper surface is implemented with an insulation rubber layer 8 to avoid an electric shock or short-circuiting with other peripheral equipment. The accomplished heating system 10 can be secondly confined at its outer peripheries by other packaging material (not shown in the drawing), such as a plastic housing, at a site of application. By this confinement, the entire heat loss to the system can be further avoided. As a back side of the exposed positive plate electrode 22 is only coated with the insulation rubber layer 8 which is a material of very low mechanical force, then the positive plate electrode 22 can be freely deformed due to stress of thermal physical deformation. As the laminated heating composite 2 is assembled by gluing, its deformation force is lead by the original gluing force to maintain the structural force of assembly, for assuring integrity of the system structure. Furthermore, the objects of moisture-proofing and anti-oxidation can be achieved, by coating with the glue.

Front and rear end openings of the heat exchanger 31 are enclosed by the seal panels 32, 33 which can be made of different materials due to specific conditions. One of the conditions is that they must have the insulation property, and the other one is that they should satisfy the mechanical strength to press the sealing ends. If the material is softer or fragile, then an outer end surface is aided with a plyboard 9 to support the surface pressure, thereby reducing inflection of the seal panels to sustain with force load, and assuring structural safety of the sealing panels.

Through pulling force of the screws 6, the plyboard 9 can generate tightening force of the seal panels 32, 33 with respect to the end surfaces of the heat exchanger 31.

The aforementioned locking implementation by the screws 6 can similarly provide convenience for maintaining and replacing the components.

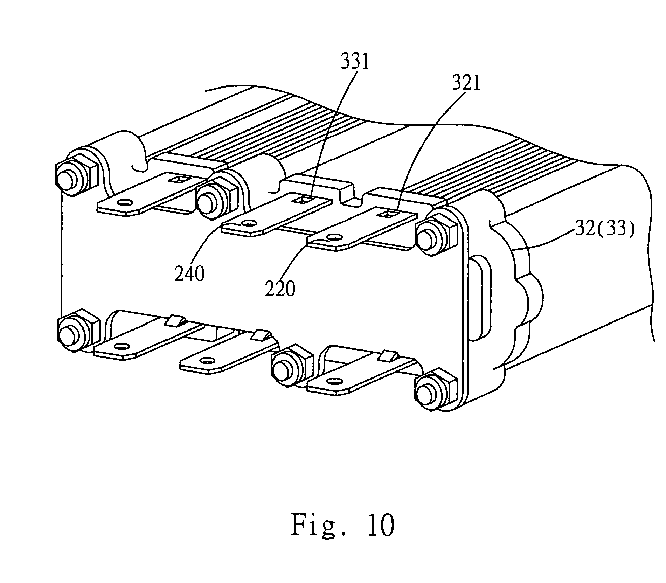

Referring to FIG. 10, on the seal panels 32, 33, at positions that terminals 220, 240 of the plate electrodes 22, 24 are assembled, there are positioning holes 321, 331 respectively, for allowing the terminals 220, 240 to be transfixed and positioned, which will facilitate the isolation of electricity, and mechanical fixing force for assembling, and also facilitate insertion of an extra power plug for conducting power, through the precise positioning.

It is of course to be understood that the embodiments described herein are merely illustrative of the principles of the invention and that a wide variety of modifications thereto may be effected by persons skilled in the art without departing from the spirit and scope of the invention as set forth in the following claims.

## Claims

1. A vehicular fluid heater 10 comprising a heat exchanger 3, an outer surface of which is configured as proper heat conduction surfaces 30, and an interior of which is defined into a heat exchange vessel 31 by a ribbed structure; a pair of seal panels 32, 33 for enclosing a front and a rear end of the heat exchange vessel 31, and for forming a fluid field where the fluid enters into the heat exchanger 3 sequentially, with one of the seal panels conducting with inlet or outlet connectors for the fluid; at least one laminated heating composite 2, an electrical thermal property of which is formed by a heating strip 21 sandwiched between plate electrodes 22, 24, and which is an independent unit that is accomplished in advance, with the negative plate electrode 24 leading the laminated heating composite 2 to be joined on the heat conduction surface of the heat exchanger 3.

2. The vehicular fluid heater 10 according to claim 1, wherein the outer surface of the heat exchange vessel 31 is configured with a plurality of adjacent and opposite heat conduction surfaces to join more than one laminated heating composite 2, thereby forming different power.

3. The vehicular fluid heater 10 according to claim 1, wherein the laminated heating composite 2 is connected with each component of the heat exchanger 3 by gluing.

4. The vehicular fluid heater 10 according to claim 3, wherein the glue is an insulated thermal adhesive.

5. The vehicular fluid heater 10 according to claim 3, wherein the glue is a thermal adhesive which conducts electricity.

6. The vehicular fluid heater 10 according to claim 1, wherein an outer surface of the positive plate electrode 22 at the outer surface of the laminated heating composite 2 is clad by an insulation rubber layer to achieve objects of insulation and moisture-proofing.

7. The vehicular fluid heater 10 according to claim 1, wherein a sealing back plate 26 is located between the laminated heating composite 2 and the heat exchanger 3 to lock the laminated heating composite 2 to the heat exchanger 3.

8. The vehicular fluid heater 10 according to claim 7, wherein an insulation plate 23 made of aluminum oxide or a material of high dielectric value is located between the laminated heating composite 2 and the sealing back plate 26.

9. The vehicular fluid heater 10 according to claim 7, wherein an insulation plate 23 made of aluminum oxide or a material of high dielectric value is located between the laminated heating composite 2 and the heat exchanger 3.

10. The vehicular fluid heater 10 according to claim 7, wherein the positive plate electrode 22 between the laminated heating composite 2 and the sealing back plate 26 is elastically deformable.

11. The vehicular fluid heater according 10 to claim 7, wherein between the sealing back plate 26 and a surface of the heat exchanger 3 is interposed with at least one elastic buffer 25 to clamp a heater.

12. The vehicular fluid heater 10 according to claim 1, wherein the laminated heating composite 2 directly joins an outer surface of the heat exchanger 3 and conducts electricity through the negative plate electrode 24, with the negative plate electrode 24 or the heat exchange vessel 31 being connected to a grounded circuit of a vehicular wiring system.

13. The vehicular fluid heater 10 according to claim 1, wherein the seal panels 32, 33 are made of an insulated plastic material that is provided with a low thermal conductivity including a ceramic material, and locations of terminals that are extended from the plate electrodes 22, 24 are disposed with terminal positioning holes 321, 331.

14. The vehicular fluid heater 10 according to claim 1, wherein the sealing panels 32, 33 are made of a metallic material, and protrusion parts at ends of the plate electrodes 22, 24 are disposed with positioning holes 321, 331 for insulated terminals.

15. The vehicular fluid heater 10 according to claim 1, wherein the heating strip 21 is made of a ceramic resistor material with a positive temperature coefficient (PTC).

16. The vehicular fluid heater 10 according to claim 1, wherein the heating strip 21 is made of a polymer plastic resistance material with a thermal-electrical function.

17. The vehicular fluid heater 10 according to claim 1, wherein the heating strip 21 is an electric heating wire having a thermal-electrical property.

18. The vehicular fluid heater 10 according to claim 1, wherein a mechanical compression plate 4 is affixed on an outer surface of an end of the sealing panel 32 or 33, to press and bridge the sealing back plate 26 to an end surface of the heat exchange vessel 31.

19. The vehicular fluid heater 10 according to claim 1, wherein the sealing panel 32 or 33 is connected with an end surface of the heat exchanger 3 by gluing.

20. The vehicular fluid heater 10 according to claim 1, wherein an elastic sealing material is locked in between an end surface of the heat exchange vessel 31 and the sealing panel 32 or 33.
